# EUROPEAN PATENT APPLICATION

(11) **EP 4 571 349 A1**
(43) Date of publication of application: **18.06.2025**
(21) Application number: 22955065.2
(22) Date of filing: 01.12.2022
(51) Int. Cl.: G01S 7/03, H01Q 13/02

(54) **RADIO WAVE SENSOR APPARATUS**

(30) Priority: 09.08.2022 JP 2022127478
(71) Applicant: Nisshinbo Micro Devices Inc., Tokyo 103-8456 (JP)
(72) Inventor: OIKAWA, Kazuo, Fujimino-shi, Saitama 356-8510 (JP)
(74) Representative: Brann AB
(86) International application number: PCT/JP2022/044384
(87) International publication number: WO 2024/034152

(57) **Abstract**

A radio wave sensor apparatus comprises: an oscillator to generate a high frequency signal; a transmitting antenna (10); a receiving antenna (11); a mixer, and a signal processing device, in which the transmitting antenna (10) has a transmitting antenna section (21) and a transmitting horn section (22A) and the receiving antenna (11) has a receiving antenna section (23) and a receiving horn section (24A); the transmitting antenna section (21) and the receiving antenna section (23) are disposed on the same plane in a spaced manner; an inner wall of the transmitting horn section (22A) and an inner wall of the receiving horn section (24A) have a wall portion (27) separating the transmitting antenna (10) and the receiving antenna (11); this wall portion (27) has a wall surface region vertical to the plane from an open end side of the transmitting horn section (22A) and an open end side of the receiving horn section (24A) toward the transmitting antenna section (21) and the receiving antenna section (23), respectively; and the transmitting horn section (22A) and the receiving horn section (24A) are disposed adjacent to each other via the wall portion (27).

## Description

### TECHNICAL FIELD

The present invention relates to a radio wave sensor apparatus, in particular, to a radio wave sensor apparatus to detect an object within a detection region by utilizing a radio wave in a microwave band or a millimeter wave band.

### BACKGROUND ART

A radio wave sensor apparatus to detect an object within a detection region by utilizing a radio wave can detect presence/absence of an object, its movement state, a distance to the object, and the like by radiating a radio wave as a transmission signal into a space and then performing a signal processing on a reflected wave that has been reflected by the object. This type of radio wave sensor apparatus is described in Patent Document 1, for example.

### PRIOR ART DOCUMENT

### Patent Document

Patent Document 1: JP 2013-113819 A

### SUMMARY OF THE INVENTION

### PROBLEM TO BE SOLVED BY THE INVENTION

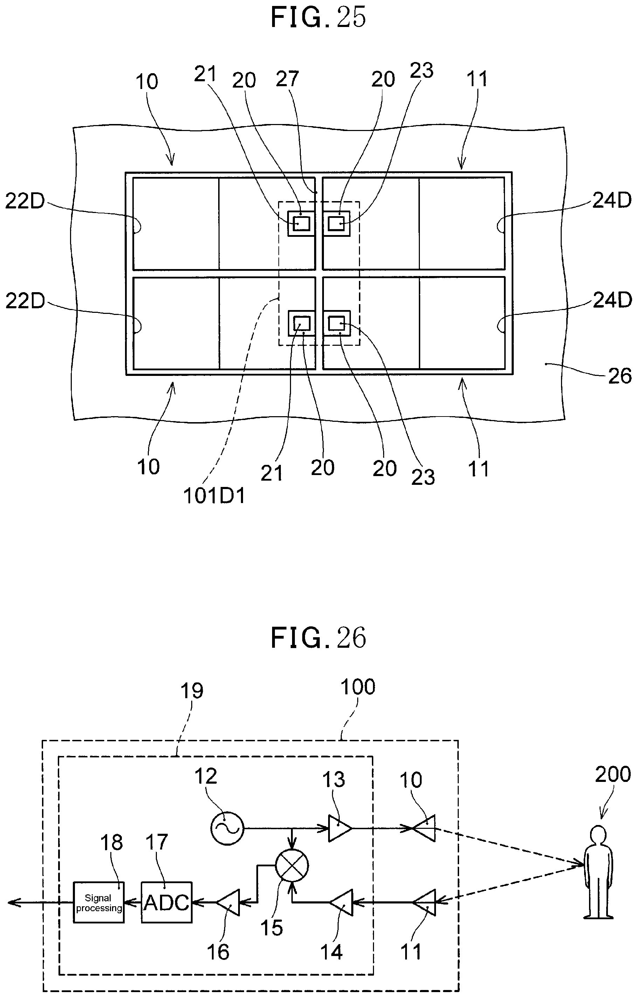

FIG. 26 is a view explaining a configuration of a general radio wave sensor apparatus. As shown in FIG. 26, a radio wave sensor apparatus 100 is configured of: a transmitting antenna 10 radiating a high frequency signal (a radio wave in a microwave band or a millimeter wave band) into a space where an object 200 exists; a receiving antenna 11 receiving a reflected wave of the high frequency signal from the object 200; an oscillator 12 generating a high frequency signal having a predetermined frequency; a transmitting side amplifier 13 amplifying the high frequency signal generated by the oscillator 12 and supplying the amplified signal to the transmitting antenna 10; a receiving side amplifier 14 amplifying the reflected wave received by the receiving antenna 11; a mixer 15 mixing the high frequency signal generated by the oscillator 12 and the reflected wave amplified by the receiving side amplifier 14 to generate a reception signal having a low frequency; an amplifier 16 amplifying the reception signal having a low frequency generated by the mixer 15; an A/D converter 17 A/D converting the reception signal amplified by the amplifier 16; and a signal processing device 18 performing a desired signal processing on the reception signal converted by the A/D converter 17. It is possible to detect presence/absence of the object 200, its movement state, a distance to the object, and the like according to a signal processing by the signal processing device 18. Letter 19 denotes a sensor circuit section configured of the oscillator 12, the mixer 15, and the like, and the sensor circuit section can be configured of a microwave integrated circuit in which functional elements constituting the sensor circuit section are disposed on a printed circuit board or of a monolithic microwave/millimeter wave integrated circuit in which functional elements constituting the sensor circuit section are disposed on an IC (integrated circuit) substrate.

In the radio wave sensor apparatus 100 having such a configuration, the transmitting antenna 10 and the receiving antenna 11 can be configured of a patch antenna, a patch array antenna, a horn antenna, or the like.

By the way, a radio wave sensor apparatus utilizing a radio wave in the microwave band or the millimeter wave band has become smaller because the sensor circuit section 19 is integrated as described above. Accordingly, a patch antenna that is small and is easily connected to an integrated circuit constituting the sensor circuit section 19 is often used for the transmitting antenna 10 and the receiving antenna 11. However, a single patch antenna has low gain and short detection distance. Further, it has wide directivity, and thus ends up detecting a movement of an object outside a desired detection region. Although it is conceivable to connect a plurality of patch antennas to adopt a patch array antenna that enhances the antenna gain in a specific direction from the standpoint of extending a detection distance, there was a problem in the patch array antenna that it required a long transmission line connecting patch antennas and a resulting loss led to a reduced antenna efficiency.

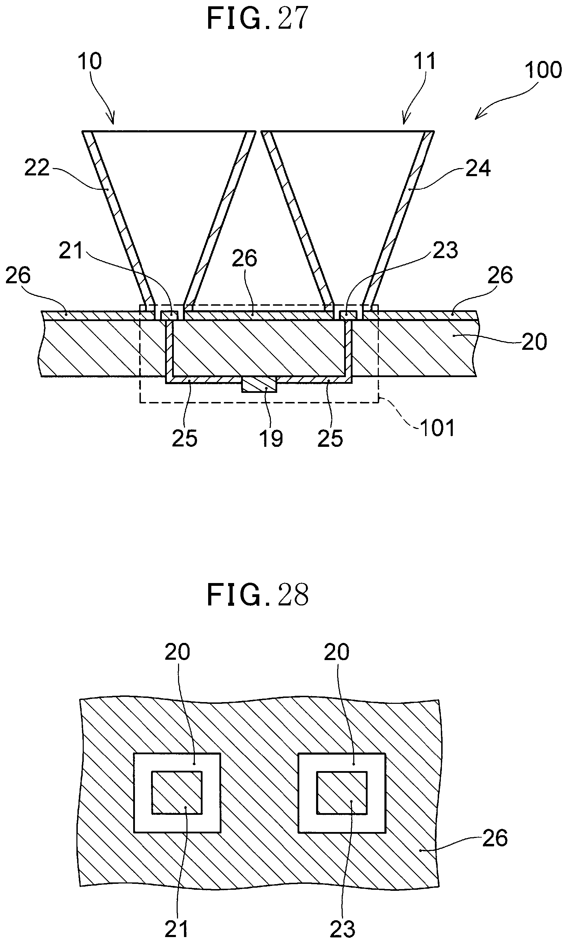

Meanwhile, a horn antenna can obtain a high antenna efficiency compared to a patch antenna. Further, with an appropriate design of the antenna directivity, an unnecessary reflected wave (noise) outside a desired detection region can be reduced and also an improved sensitivity is expected. FIG. 27 is a schematic cross-sectional view of a radio wave sensor apparatus 100 in the related art, in which the transmitting antenna 10 and the receiving antenna 11 are configured of a horn antenna. As shown in FIG. 27, the transmitting antenna 10 is configured by a transmitting antenna section 21 and a transmitting horn section 22 to cover the transmitting antenna section 21 being disposed on a substrate 20. Further, the receiving antenna 11 is configured by a receiving antenna section 23 and a receiving horn section 24 to cover the receiving antenna section 23 being disposed. FIG. 28 is a schematic plan view showing the transmitting antenna section 21 and the receiving antenna section 23 configured of coplanar patch antennas disposed on the substrate 20, which also corresponds to FIG. 27. In the case where each of the transmitting antenna section 21 and the receiving antenna section 23 is configured of a coplanar patch antenna, as shown in FIG. 28, a ground plane 26 is disposed around the transmitting antenna section 21 and the receiving antenna section 23 on the substrate 20, and the transmitting horn section 22 and the receiving horn section 24 are disposed on the ground plane 26, respectively. To the transmitting antenna section 21 and the receiving antenna section 23, the sensor circuit section 19, in which the oscillator 12, the mixer 15, and the like as shown in FIG. 26 are formed, is connected via a transmission line 25.

As shown in FIG. 27, in the case where the transmitting horn section 22 and the receiving horn section 24 each provided with a large opening are disposed adjacent to each other on the substrate 20, each of the transmitting antenna section 21 of the transmitting antenna 10 and the receiving antenna section 23 of the receiving antenna 11 is connected to the sensor circuit section 19 via a relatively long transmission line 25. In the radio wave sensor apparatus 100 having such a configuration, the long transmission line 25 increases a loss when a high frequency signal is utilized in a microwave band or a millimeter wave band. Further, because it is necessary to dispose the transmitting horn section 22 and the receiving horn section 24 having a large opening, there was a problem that a size of a sensor circuit region 101 including the sensor circuit section 19, the transmitting antenna section 21, and the receiving antenna section 23 was increased.

Therefore, it is an object of the present invention to provide a radio wave sensor apparatus in which a sharp directivity and a high antenna gain can be obtained and a size of a sensor circuit region including a sensor circuit section, a transmitting antenna section, and a receiving antenna section can be reduced.

### MEANS TO SOLVE THE PROBLEM

A radio wave sensor apparatus of the present invention comprises: an oscillator to generate a high frequency signal; a transmitting antenna to radiate the high frequency signal into a space; a receiving antenna to receive a reflected wave of the high frequency signal from an object; a mixer to mix the high frequency signal and the reflected wave received by the receiving antenna to produce a reception signal; and a signal processing device to produce a detection signal of the object from the reception signal, in which the transmitting antenna has a transmitting antenna section and a transmitting horn section; the receiving antenna has a receiving antenna section and a receiving horn section; the transmitting antenna section and the receiving antenna section are disposed in a spaced manner on a same plane; an inner wall of the transmitting horn section and an inner wall of the receiving horn section have a wall portion that separates the transmitting antenna and the receiving antenna from each other; the wall portion having a wall surface region vertical to the plane from an open end side of the transmitting horn section and an open end side of the receiving horn section toward the transmitting antenna section and the receiving antenna section, respectively; and the transmitting horn section and the receiving horn section are disposed adjacent to each other via the wall portion.

### EFFECTS OF THE INVENTION

According to the radio wave sensor apparatus of the present invention, the inner wall of the transmitting horn section and the inner wall of the receiving horn section have the wall portion that separates the transmitting antenna and the receiving antenna from each other, the wall portion having a wall surface region vertical to a plane on which the transmitting antenna section and the receiving antenna section are disposed from an open end side of the transmitting horn section and an open end side of the receiving horn section toward the transmitting antenna section and the receiving antenna section, respectively, and the transmitting horn section and the receiving horn section are disposed adjacent to each other via the wall portion, so that the size of the radio wave sensor apparatus, in particular, a sensor circuit region including a sensor circuit section, the transmitting antenna section and the receiving antenna section can be reduced. As a result, a length of the transmission line can be shortened and the antenna efficiency can be increased. Further, the transmitting antenna and the receiving antenna are configured of a horn antenna structure, and thus a radio wave sensor apparatus having a sharp directivity and a high antenna gain can be provided.

### BRIEF DESCRIPTION OF THE DRAWINGS

FIG. 1 is a schematic plan view of a transmitting antenna and a receiving antenna in a radio wave sensor apparatus being one embodiment (Embodiment 1) of the present invention.
FIG. 2 is a schematic cross-sectional view taken along a line A-A of the radio wave sensor apparatus in FIG. 1.
FIG. 3 is a view explaining antenna gains on the E-plane of the transmitting antenna and the receiving antenna in the radio wave sensor apparatus in Embodiment 1.
FIG. 4 is a view explaining antenna gains on the H-plane of the transmitting antenna and the receiving antenna in the radio wave sensor apparatus in Embodiment 1.
FIG. 5 is a view explaining a detection area of the radio wave sensor apparatus in Embodiment 1.
FIG. 6 is a view explaining a detection area taken along a cross-section a-a in FIG. 5 of the radio wave sensor apparatus in Embodiment 1.
FIG. 7 is a schematic plan view of a transmitting antenna and a receiving antenna in a radio wave sensor apparatus being one embodiment (Embodiment 2) of the present invention.
FIG. 8 is a schematic cross-sectional view taken along a line B-B of the radio wave sensor apparatus in FIG. 7.
FIG. 9 is a view explaining antenna gains on the H-plane of the transmitting antenna and the receiving antenna in the radio wave sensor apparatus in Embodiment 2.
FIG. 10 is a view explaining an electric field distribution of the radio wave sensor apparatus in Embodiment 2.
FIG. 11 is a view explaining antenna gains on the E-plane of the transmitting antenna and the receiving antenna in the radio wave sensor apparatus in Embodiment 2.
FIG. 12 is a view explaining a detection area of the radio wave sensor apparatus in Embodiment 2.
FIG. 13 is a schematic plan view of the transmitting antenna and the receiving antenna in the radio wave sensor apparatus in a variation of Embodiment 2.
FIG. 14 is a schematic plan view of the transmitting antenna and the receiving antenna in the radio wave sensor apparatus in another variation of Embodiment 2.
FIG. 15 is a schematic cross-sectional view of a transmitting antenna and a receiving antenna in a radio wave sensor apparatus being one embodiment (Embodiment 3) of the present invention.
FIG. 16 is a view explaining an electric field distribution of the radio wave sensor apparatus in Embodiment 3.
FIG. 17 is a view explaining antenna gains on the H-plane of the transmitting antenna and the receiving antenna in the radio wave sensor apparatus in Embodiment 3.
FIG. 18 is a view explaining antenna gains on the E-plane of the transmitting antenna and the receiving antenna in the radio wave sensor apparatus in Embodiment 3.
FIG. 19 is a view explaining a detection area of the radio wave sensor apparatus in Embodiment 3.
FIG. 20 is a schematic plan view of a transmitting antenna and a receiving antenna in a radio wave sensor apparatus being one embodiment (Embodiment 4) of the present invention.
FIG. 21 is a schematic cross-sectional view of the transmitting antenna and the receiving antenna in the radio wave sensor apparatus in Embodiment 4.
FIG. 22 is a view explaining antenna gains on the H-plane of the transmitting antenna and the receiving antenna in the radio wave sensor apparatus in Embodiment 4.
FIG. 23 is a view explaining antenna gains on the E-plane of the transmitting antenna and the receiving antenna in the radio wave sensor apparatus in Embodiment 4.
FIG. 24 is a view explaining a detection area of the radio wave sensor apparatus in Embodiment 4.
FIG. 25 is a schematic plan view of the transmitting antenna and the receiving antenna in the radio wave sensor apparatus in a variation of Embodiment 4.
FIG. 26 is an explanatory view of a configuration of a general radio wave sensor apparatus.
FIG. 27 is a schematic cross-sectional view of a radio wave sensor apparatus in the related art in which a transmitting antenna and a receiving antenna are configured of a horn antenna.
FIG. 28 is a schematic plan view showing a transmitting antenna section and a receiving antenna section configured of coplanar patch antennas disposed on a substrate in the related art.

### EMBODIMENT FOR CARRYING OUT THE INVENTION

A radio wave sensor apparatus of the present invention is explained with reference to the drawings, but the present invention is not limited to these embodiments, and the members, materials, and the like described below can be variously modified within the range of the gist of the present invention. Further, a same reference numeral in the drawings indicates an equivalent or the same component, and a size, a positional relation, and the like of each component in the drawings are merely for the purpose of convenience and do not reflect their actual states.

### (Embodiment 1)

A radio wave sensor apparatus 100A of this embodiment is, similarly to the radio wave sensor apparatus 100 explained in FIG. 26, configured of a transmitting antenna 10 to radiate a high frequency signal (a radio wave in a microwave band or a millimeter wave band) into a space where an object 200 exists, a receiving antenna 11 to receive a reflected wave of the high frequency signal from the object 200, an oscillator 12 to generate a high frequency signal having a predetermined frequency, a transmitting side amplifier 13 to amplify the high frequency signal generated by the oscillator 12 to supply the amplified signal to the transmitting antenna 10, a receiving side amplifier 14 to amplify the reflected wave received by the receiving antenna 11, a mixer 15 to mix the high frequency signal generated by the oscillator 12 and the reflected wave amplified by the receiving side amplifier 14 to generate a reception signal having a low frequency, an amplifier 16 to amplify the reception signal having a low frequency generated by the mixer 15, an A/D converter 17 to A/D convert the reception signal amplified by the amplifier 16, and a signal processing device 18 to perform a desired signal processing onto the reception signal converted by the A/D converter 17. It is possible to detect presence/absence of the object 200, its movement state, a distance to the object, and the like according to the signal processing by the signal processing device 18. A sensor circuit section 19, in which the oscillator 12, the mixer 15, and the like are formed, is configured of a high frequency circuit section configured of the oscillator 12, the mixer 15, and the like, a low frequency signal amplifying and A/D converting circuit, in which the signal output by the mixer 15 is amplified, and a signal processing circuit performing a calculation using the digital-converted signal and extracting a necessary information therefrom. The high frequency circuit section can be configured of a microwave integrated circuit in which functional elements configuring the sensor circuit section are disposed on a printed circuit board, or of a monolithic microwave/millimeter wave integrated circuit in which functional elements configuring the sensor circuit section are disposed on an IC (integrated circuit) substrate.

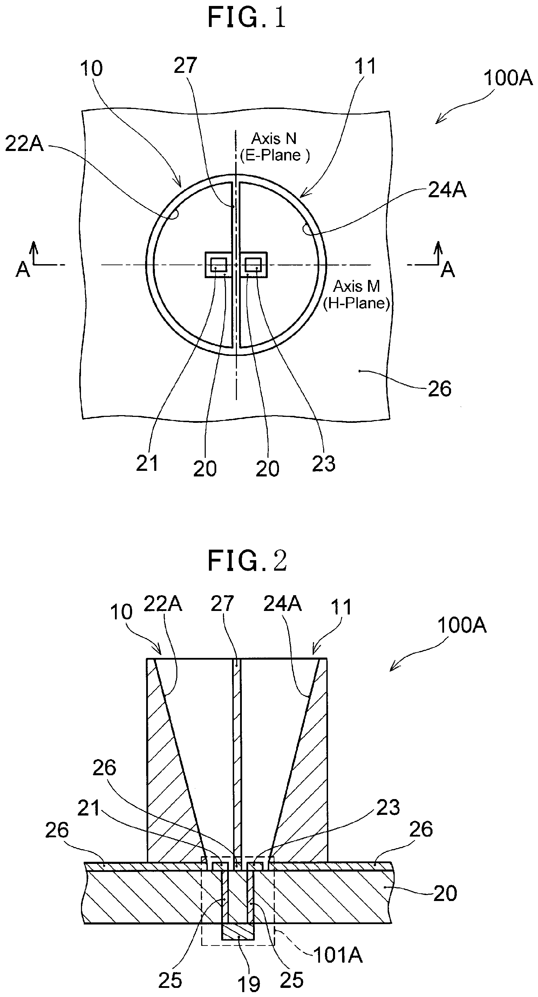

The radio wave sensor apparatus 100A of this embodiment has the transmitting antenna 10 and the receiving antenna 11 with a horn antenna structure by which a sharp directivity and a high antenna efficiency are obtained, and has a configuration that enables a size reduction of the sensor circuit region 101A including the sensor circuit section 19, the transmitting antenna section 21, and the receiving antenna section 23. With the size reduction of the sensor circuit region 101A, the length of the transmission line can be shortened and thereby a transmission/reception efficiency can be enhanced. FIG. 1 is a schematic plan view of the transmitting antenna 10 and the receiving antenna 11 in the radio wave sensor apparatus 100A in Embodiment 1 of the present invention, showing a part of a substrate 20 on which the transmitting antenna 10 and the receiving antenna 11 are disposed. FIG. 2 is a schematic cross-sectional view taken along the line A-A in the radio wave sensor apparatus 100A shown in FIG. 1. As shown in FIGS. 1 and .2, in the sensor circuit region 101A according to the present Embodiment 1, the transmitting antenna section 21 configuring the transmitting antenna 10 and the receiving antenna section 23 configuring the receiving antenna 11 are disposed on the substrate 20. Each of the transmitting antenna section 21 and the receiving antenna section 23 can be configured of a coplanar patch antenna. Here, the transmitting antenna section 21 and the receiving antenna section 23 can be disposed adjacent to each other to an extent where a wall portion 27 can be disposed therebetween, and, for example the dimension between the center of the transmitting antenna section 21 and the center of the receiving antenna section 23 can be set to one wavelength of a high frequency signal used. As a result, the size of the sensor circuit region 101A including the sensor circuit section 19, the transmitting antenna section 21, and the receiving antenna section 23 can be reduced.

The transmitting horn section 22A and the receiving horn section 24A, which are disposed so as to cover the transmitting antenna section 21 and the receiving antenna section 23, have a configuration where the wall portion 27 is disposed between the transmitting antenna section 21 and the receiving antenna section 23. The wall portion 27 is connected to the ground plane 26, and has a function of improving the isolation (separation) characteristics between the transmitting antenna 10 and the receiving antenna 11. Each inner wall of the transmitting horn section 22 A and the receiving horn section 24A except for a wall surface of the wall portion 27 can be configured of a part of an inner wall of a general conical horn that is designed so that the desired antenna gain and directivity can be obtained. **In** this embodiment, a conical horn, by which the desired characteristics can be obtained, is evenly divided by the wall portion 27 along the height direction, the transmitting horn section 22A is configured of one of inner walls of the divided conical horn and one of surfaces of the wall portion 27, and the receiving horn section 24A is configured of the other inner wall of the conical horn and the other surface of the wall portion 27. Each of the transmitting horn section 22A and the receiving horn section 24A is disposed on the substrate 20 via the ground plane 26, has a rectangular waveguide shape in the vicinity of the transmitting antenna section 21 and the receiving antenna section 23, and is configured in a manner that an area of its opening is enlarged toward the height direction away from the transmitting antenna section 21 and the receiving antenna section 23, its opening having a semicircular shape.

Further, the wall portion 27 is disposed vertical to the surface of the substrate 20, and a wall surface region vertical from each open end side of the transmitting horn section 22A and the receiving horn section 24A toward the transmitting antenna section 21 and the receiving antenna section 23, respectively, is configured. By evenly dividing a space by means of the wall portion 27 in this way, the transmitting horn section 22A and the receiving horn section 24A that are disposed adjacent to each other can be formed in a symmetrical shape with respect to the wall portion 27, and thereby the transmitting antenna 10 and the receiving antenna 11 having uniform characteristics are disposed adjacent to each other. Here, the description "disposed vertical" shall include a case where the wall surface region is formed in a direction perfectly orthogonal to the surface of the substrate 20, as well as a case where the wall surface region slightly tilting from the direction orthogonal to the surface of the substrate 20 is formed within a range where desired characteristics can be obtained. Further, a case is included where a part of the wall surface region slightly tilts from the direction orthogonal to the surface of the substrate 20. For example, in a case where the transmitting horn section 22A and the receiving horn section 24A are produced by a method using a mold such as die casting, the wall surface requires a draft and thus is not necessarily vertical thereto.

The high frequency signal generated by the oscillator 12 that is formed in the sensor circuit section 19 is transmitted to the transmitting antenna section 21 through the transmission line 25. In this embodiment, the length of the transmission line 25 can be shortened, because the transmitting antenna section 21 and the receiving antenna section 23 are disposed adjacent to each other to an extent where the dimension between the center of the transmitting antenna section 21 and the center of the receiving antenna section 23 correspond to around one wavelength of a high frequency signal used. With this configuration, a transmission loss in the transmission line 25 is reduced, the high frequency signal generated by the oscillator 12 is effectively sent from the transmitting antenna section 21 configured of a coplanar patch antenna, is wave-shaped in the transmitting horn section 22A so that the radio wave is directed toward a desired direction, and is then radiated into a space from the opening of the transmitting antenna 10. Therefore, the gain (antenna gain) in the desired direction is enhanced. In this embodiment, explanation is made referring a plane parallel to the axis N parallel to the wall portion 27 shown in FIG. 1 as a E-plane, and referring a plane parallel to the axis M orthogonal to the axis N as a H-plane.

In the case where the object 200 exists in a space where the high frequency signal is radiated, the high frequency signal that has been radiated by the transmitting antenna 10 is reflected by the object 200. The reflected wave is received by the receiving antenna 11. In the receiving antenna 11, the reflected wave passes through the receiving horn section 24A, is converted from a waveguide mode to a transmission line mode in the receiving antenna section 23, and is then transmitted to the sensor circuit section 19 through the transmission line 25. By performing a desired signal processing in the sensor circuit section 19, it is possible to detect presence/absence of the object 200, its movement state, a distance to the object, and the like. It should be noted that the sensor circuit section 19 corresponds to the signal processing device including a processing circuit that is necessary for a desired detection.

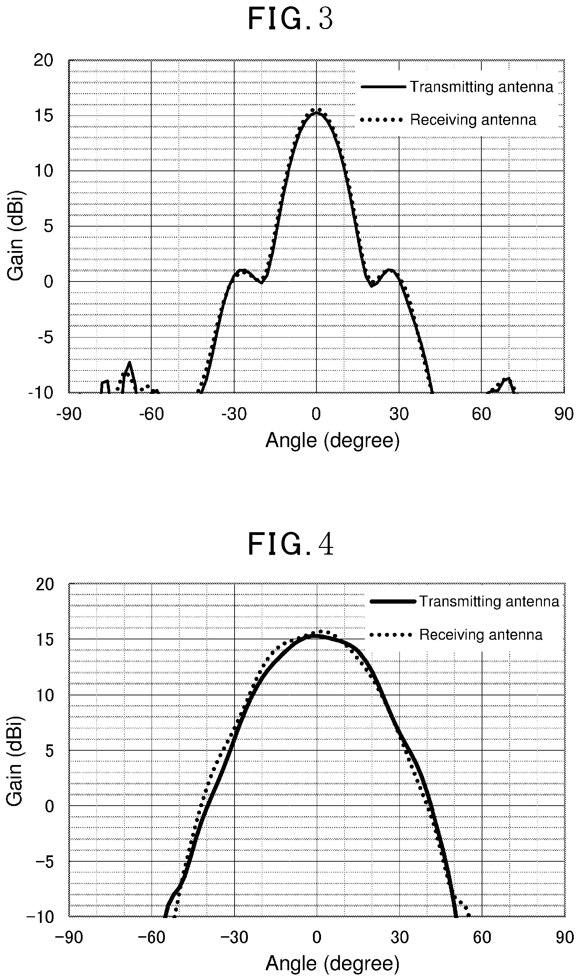

FIG. 3 is a view explaining antenna gains of the transmitting antenna 10 and the receiving antenna 11 in the radio wave sensor apparatus 100A of this embodiment, in which the antenna gains on the plane (E-plane) parallel to the wall portion 27 in FIG. 1 are shown. In FIG. 3, the antenna gain of the transmitting antenna 10 is indicated by a solid line and the antenna gain of the receiving antenna 11 is indicated by a broken line, and the angle 0 degrees corresponds to the vertical direction to the surface of the substrate 20 at the center of the transmitting antenna section 21 or the center of the receiving antenna section 23 shown in FIG. 1. As shown in FIG. 3, it is recognized that the transmitting antenna 10 and the receiving antenna 11 have the highest antenna gains at the front of their openings (in the vertical direction to the surface of the substrate 20 on which the transmitting antenna section 21 and the receiving antenna section 23 are disposed). Further, it is recognized that there is no difference in the antenna gain between the transmitting antenna 10 and the receiving antenna 11.

FIG. 4 is a view explaining antenna gains of the transmitting antenna 10 and the receiving antenna 11 in the radio wave sensor apparatus 100A of this embodiment, in which the antenna gains on the plane (H-plane) orthogonal to the wall portion 27 in FIG.1 are shown. In FIG. 4, the antenna gain of the transmitting antenna 10 is indicated by a solid line and the antenna gain of the receiving antenna 11 is indicated by a broken line. As shown in FIG. 4, it is recognized that the transmitting antenna 10 and the receiving antenna 11 have the highest antenna gains at the front of their openings. Further, it is recognized that there is little difference in antenna gain between the transmitting antenna 10 and the receiving antenna 11.

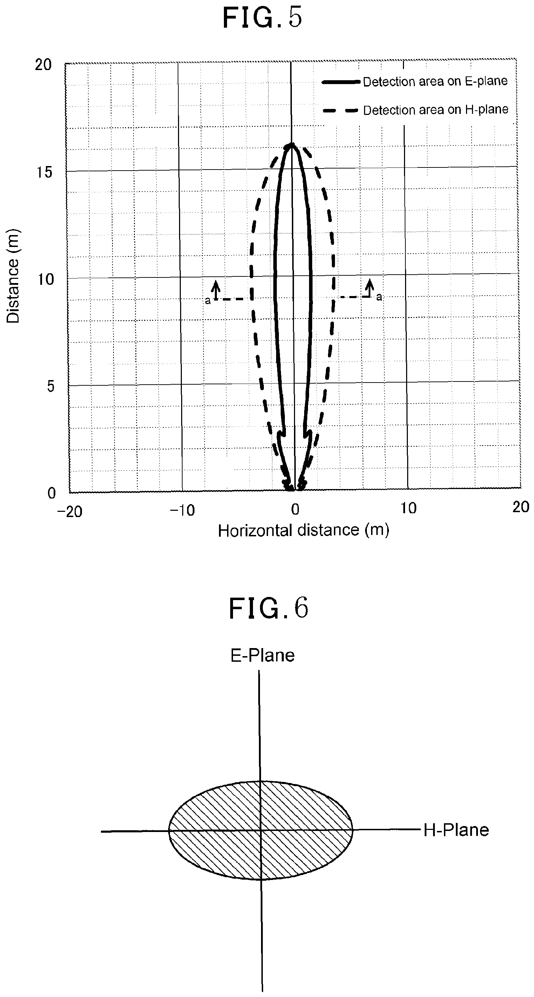

FIG. 5 is a view explaining a detection area of the radio wave sensor apparatus 100A provided with the transmitting antenna 10 and the receiving antenna 11 that have the antenna gains shown in FIG. 3 and FIG. 4, and is an example of a case where a high frequency signal in the millimeter wave band (frequency: 60 GHz) is transmitted/received. In FIG. 5, a detection area on the plane (E-plane) parallel to a wall portion 27 shown in FIG. 1 is indicated by a solid line, and a detection area of the plane (H-plane) orthogonal thereto is indicated by a broken line. In the radio wave sensor apparatus 100A having such detection areas, a detection area taken along the line a-a from the radio wave sensor apparatus 100 has an oval shape as shown in FIG. 6, for example. Further, in this embodiment, it is recognized that a sharp directivity is obtained with fewer side lobes because of the horn antenna structure. Furthermore, compared to the case where the transmitting antenna 10 and the receiving antenna 11 are configured of a patch antenna, an object at a farther location can be detected even with openings having the same size, because of the short transmission line 25, a high transmission/receipt efficiency, and a high antenna efficiency.

### (Embodiment 2)

Next, Embodiment 2 of the radio wave sensor apparatus of the present invention is explained. A radio wave sensor apparatus 100B of the present embodiment can detect presence/absence of an object 200, its movement state, a distance to the object, and the like by a configuration and signal processing similar to those of the radio wave sensor apparatus 100 explained in FIG. 26, similarly to Embodiment 1. Further, shapes of the transmitting antenna 10 and the receiving antenna 11 are different from those in Embodiment 1.

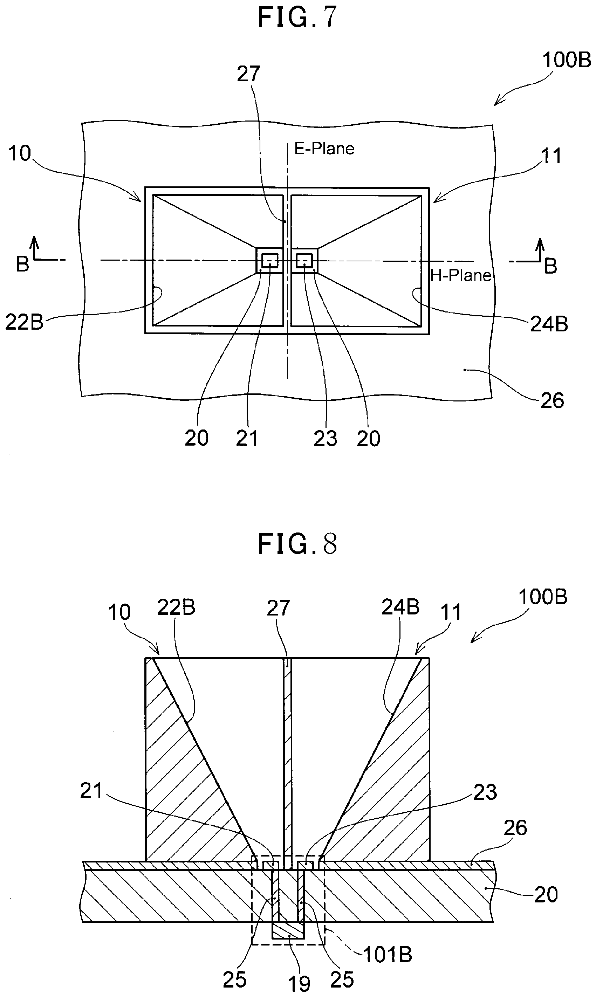

Also in the radio wave sensor apparatus 100B of this embodiment, the transmitting antenna 10 and the receiving antenna 11 have a horn antenna structure by which a sharp directivity and a high antenna efficiency can be obtained, and have a configuration that enables a size reduction of a sensor circuit region 101B including the sensor circuit section 19, the transmitting antenna section 21, and the receiving antenna section 23. With the size reduction of the sensor circuit region 101B, the transmission line can be shortened and thus a transmission/reception efficiency can be enhanced. FIG. 7 is a schematic plan view of the transmitting antenna 10 and the receiving antenna 11 in the radio wave sensor apparatus 100B in Embodiment 2 of the present invention, and shows a part of the substrate 20 on which the transmitting antenna 10 and the receiving antenna 11 are disposed. FIG. 8 is a cross-sectional schematic view taken along the line B-B in the radio wave sensor apparatus 100B shown in FIG. 7. As shown in FIG. 7 and FIG. 8, in the radio wave sensor apparatus 100B according to Embodiment 2, the transmitting antenna section 21 configuring the transmitting antenna 10 and the receiving antenna section 23 configuring the receiving antenna 11 are disposed on the substrate 20. Each of the transmitting antenna section 21 and the receiving antenna section 23 can be configured of a coplanar patch antenna. Here, the transmitting antenna section 21 and the receiving antenna section 23 can be disposed adjacent to each other to an extent where a wall portion 27 can be disposed therebetween, and the dimension between the center of the transmitting antenna section 21 and the center of the receiving antenna section 23 can be set to one wavelength of a high frequency signal used, for example. As a result, the size of the sensor circuit region 101B including the sensor circuit section 19, the transmitting antenna section 21, and the receiving antenna section 23 can be reduced.

The transmitting horn section 22B and the receiving horn section 24B disposed so as to cover the transmitting antenna section 21 and the receiving antenna section 23 have a configuration in which the wall portion 27 is disposed between the transmitting antenna section 21 and the receiving antenna section 23. The wall portion 27 is connected to a ground plane 26 and has a function of improving the isolation (separation) characteristics between the transmitting antenna 10 and the receiving antenna 11. Each inner wall of the transmitting horn section 22B and the receiving horn section 24B except for the wall surface of the wall portion 27 can be configured of a part of an inner wall of a general pyramidal horn that is designed so that desired antenna gain and directivity can be obtained. In this embodiment, the pyramidal horn by which desired characteristics can be obtained is evenly divided along the height direction by the wall portion 27, the transmitting horn section 22B is configured of one of the inner walls of the divided pyramidal horn and one of the surfaces of the wall portion 27, and the receiving horn section 24B is configured of the other inner wall of the pyramidal horn and the other surface of the wall portion 27. The transmitting horn section 22B and the receiving horn section 24B are disposed on the substrate 20 via the ground plane 26, respectively, have a rectangular waveguide shape in the vicinity of the transmitting antenna section 21 and the receiving antenna section 23, and are configured in a manner that an opening area is enlarged in the height direction away from the transmitting antenna section 21 and the receiving antenna section 23, each opening of the transmitting horn section 22B and the receiving horn section 24B having a square shape.

Further, the wall portion 27 is disposed vertical to the surface of the substrate 20, and a wall surface region vertical from an open end side of the transmitting horn section 22B and an open end side of the receiving horn section 24B toward the transmitting antenna section 21 and the receiving antenna section 23, respectively, is configured. By evenly dividing a space by the wall portion 27 in this way, the transmitting horn section 22B and the receiving horn section 24B disposed adjacent to each other can have a symmetrical shape with respect to the wall portion 27, and thereby the transmitting antenna 10 and the receiving antenna 11 having uniform characteristics are disposed adjacent to each other. Also in this embodiment, the description "disposed vertical" shall include a case where the wall surface region is formed in the direction perfectly orthogonal to the surface of the substrate 20, as well as the case where the wall surface region slightly tilting from the direction orthogonal to the surface of the substrate 20 is formed within a range where desired characteristics can be obtained. Further, the case is included where a part of the wall surface region slightly tilts from the direction orthogonal to the surface of the substrate 20.

The high frequency signal generated by the oscillator 12 formed in the sensor circuit section 19 is transmitted to the transmitting antenna section 21 through the transmission line 25. Also in this embodiment, the length of the transmission line 25 can be shortened because the transmitting antenna section 21 and the receiving antenna section 23 can be disposed adjacent to an extent where the dimension between the center of the transmitting antenna section 21 and the center of the receiving antenna section 23 correspond to around one wavelength of a high frequency signal used. With this configuration, a transmission loss in the transmission line 25 is reduced, the high frequency signal generated by the oscillator 12 is effectively sent from the transmitting antenna section 21 configured of a coplanar patch antenna, is wave-shaped so that the radio wave is directed toward a desired direction in the transmitting horn section 22B, and is then radiated into a space from the opening of the transmitting antenna 10. Therefore, the gain (antenna gain) in a desired direction is enhanced. In this embodiment, an explanation is given assuming that a plane parallel to the wall portion 27 shown in FIG. 7 is a E-plane and a plane orthogonal to the E-plane is a H-plane.

In the case where the object 200 exists in a space where the high frequency signal is radiated, the high frequency signal that has been radiated by the transmitting antenna 10 is reflected by the object 200. The reflected wave is received by the receiving antenna 11. In the receiving antenna 11, the reflected wave passes through the receiving horn section 24B, is converted from a waveguide mode to a transmission line mode in the receiving antenna section 23, and is then transmitted to the sensor circuit section 19 through the transmission line 25. By performing a desired signal processing in the sensor circuit section 19, it is possible to detect presence/absence of the object 200, its movement state, a distance to the object, and the like.

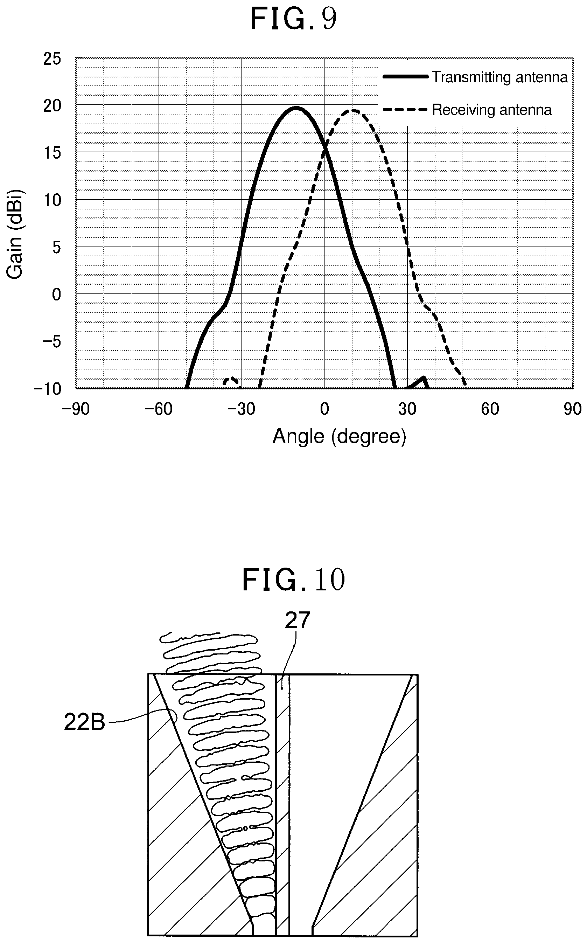

FIG. 9 is a view explaining antenna gains of the transmitting antenna 10 and the receiving antenna 11 in the radio wave sensor apparatus 100B of this embodiment, in which the antenna gains on the plane (H-plane) orthogonal to the wall portion 27 in FIG. 7 are shown. In FIG. 9, the antenna gain of the transmitting antenna 10 is indicated by a solid line and the antenna gain of the receiving antenna 11 is indicated by a broken line. As shown in FIG. 9, it is recognized that the transmitting antenna 10 and the receiving antenna 11 have the highest antenna gains at a location displaced from the front of their openings. It is recognized that, as seen in FIG. 10 showing an electric field distribution view in the case where a high frequency signal is radiated from the transmitting antenna 10 of the radio wave sensor apparatus 100B in this embodiment, the high frequency signal is radiated in a tilted manner from the front of the openings and thereby a location where the antenna gain becomes highest is displaced from the front of the openings. The same applies to the receiving antenna 11, in which the receiving antenna gain from the direction tilted oppositely to the tilted angle for the transmitting antenna 10 from the front of the openings becomes highest.

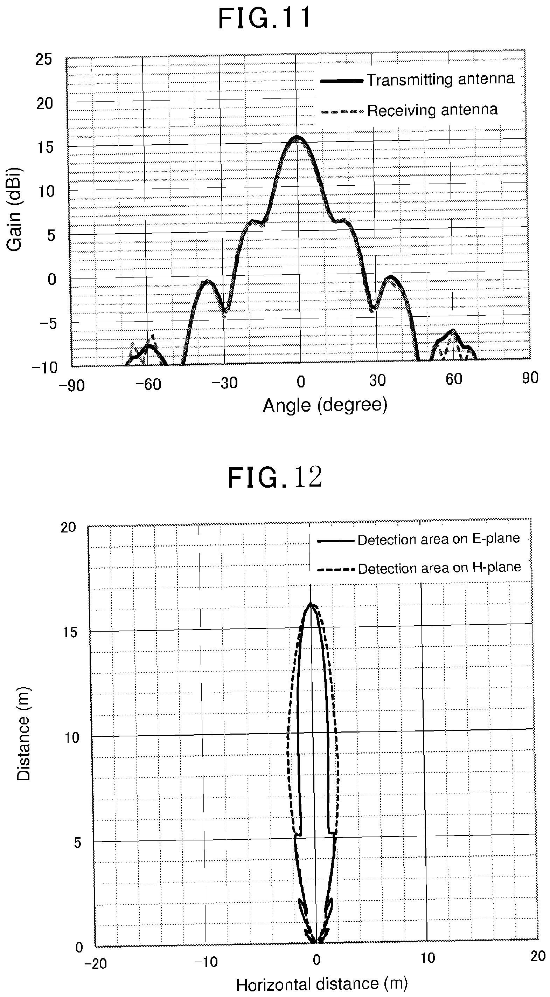

FIG. 11 is a view explaining antenna gains of the transmitting antenna 10 and the receiving antenna 11 in the radio wave sensor apparatus 100B of this embodiment, in which the antenna gains on the plane (E-plane) parallel to the wall portion 27 in FIG. 7 are shown. In FIG. 11, the antenna gain of the transmitting antenna 10 is indicated by a solid line and the antenna gain of the receiving antenna 11 is indicated by a broken line. As shown in FIG. 11, it is recognized that the transmitting antenna 10 and the receiving antenna 11 have the highest antenna gains at the front of the openings. Further, it is recognized that there is little difference in the antenna gain between the transmitting antenna 10 and the receiving antenna 11.

FIG. 12 is a view explaining a detection area of the radio wave sensor apparatus 100B provided with the transmitting antenna 10 and the receiving antenna 11 having the antenna gains shown in FIG. 9 and FIG. 11, and is an example in the case where a high frequency signal in the millimeter wave band (frequency: 60 GHz) is transmitted/received. In FIG. 12, a detection area on the plane (E-plane) parallel to the wall portion 27 shown in FIG. 7 is indicated by a solid line and a detection area on the plane (H-plane) orthogonal to the wall portion 27 is indicated by a broken line. A detection distance in the front direction is shorter than that expected from the opening area because the directivity of the transmitting antenna 10 and the receiving antenna 11 is displaced, but it is recognized that a detection can be performed in the forward direction of the transmitting antenna 10 and the receiving antenna 11 as shown in FIG. 12. Further, it can be confirmed that a sharp directivity is obtained by a horn antenna structure in this embodiment. In this way, it was confirmed that the transmitting antenna 10 and the receiving antenna 11 can be used as the radio wave sensor apparatus 100B even in the case where each directivity thereof is slightly displaced from the front thereof.

In this embodiment, the case has been explained where the widths of the E-plane and the H-plane are set to approximately the same in the opening of the transmitting horn section 22B of the transmitting antenna 10 and the opening of the receiving horn section 24B of the receiving antenna 11, the openings having a square shape, but the opening of the transmitting horn section 22B and the opening of the receiving horn section 24B may have a rectangular shape with any selected ratio between the E-plane and the H-plane. Also, any polygonal shape may be selected. Furthermore, the transmitting horn section 22B and the receiving horn section 24B may be formed asymmetrically with respect to the wall portion 27.

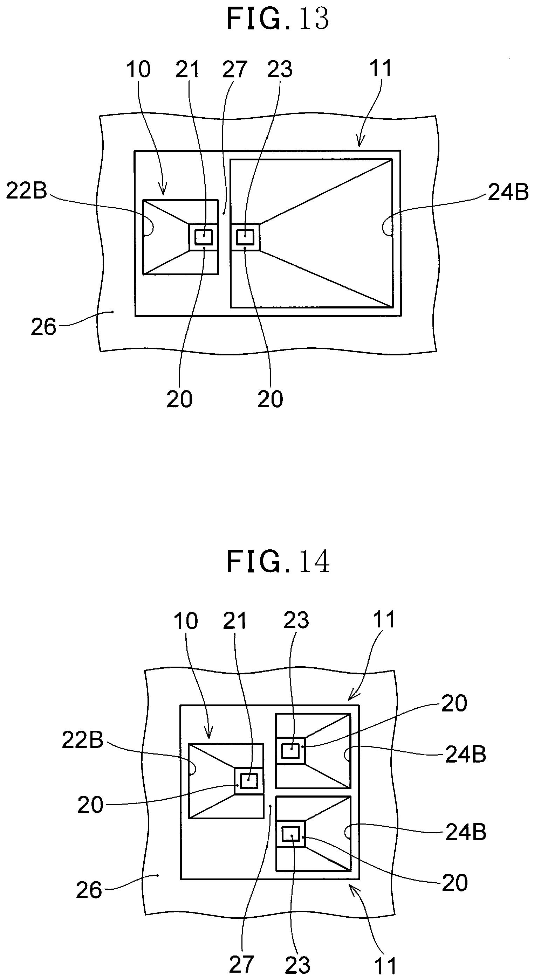

Next, a variation of Embodiment 2 is explained. Generally, there is a case where the maximum transmission electric power of the transmitting antenna and the maximum gain of the transmitting antenna are limited based on the Radio Law, for example, when a radio wave sensor apparatus is used. Thus, the variation of Embodiment 2 has a configuration where the antenna gain of the receiving antenna is enhanced by forming an opening area of the receiving antenna larger than that of the transmitting antenna. FIG. 13 is a schematic plan view of the transmitting antenna and the receiving antenna in the radio wave sensor apparatus in a variation of Embodiment 2. The receiving antenna 11 has a larger opening area compared to that of the transmitting antenna 10. Further, another variation of Embodiment 2 shows that a configuration provided with a plurality of receiving circuits can be formed by arranging a larger number of the receiving antenna 11 than the transmitting antenna 10. FIG. 14 is a schematic plan view of the transmitting antenna and the receiving antenna in the radio wave sensor apparatus in another variation of Embodiment 2. The number of the receiving antenna 11 is larger compared to the number of the transmitting antenna 10. In this way, the antenna gains of the transmitting antenna 10 and the receiving antenna 11 can be adjusted by appropriately setting an opening area or the number of the transmitting antenna 10 and the receiving antenna 11. Further, a highly functional radio wave sensor apparatus, which can detect an angle where an object exists and prevent interference, can be formed by arranging a plurality of receiving circuits.

### (Embodiment 3)

Next, Embodiment 3 of the radio wave sensor apparatus of the present invention is explained. Similarly to Embodiment 1, a radio wave sensor apparatus 100C in this embodiment can detect presence/absence of an object 200, its movement state, a distance to the object, and the like by means of a configuration and signal processing similar to the radio wave sensor apparatus 100 explained in FIG. 26. Further, shapes of the transmitting antenna 10 and the receiving antenna 11 are different from those in Embodiment 1 and Embodiment 2.

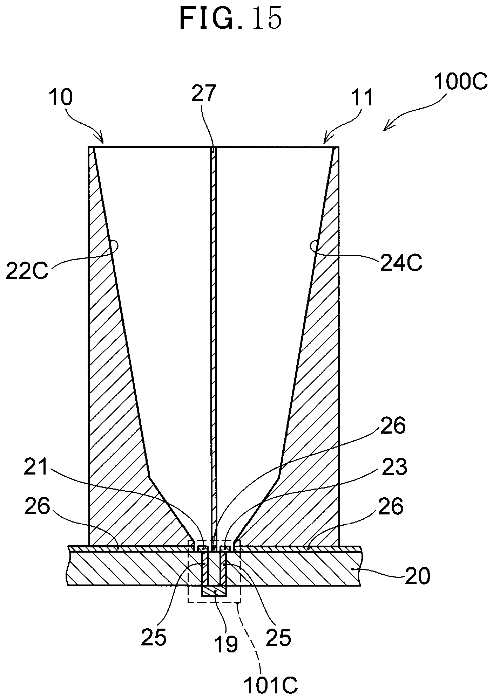

The radio wave sensor apparatus 100C in the present embodiment also has the transmitting antenna 10 and the receiving antenna 11 with a horn antenna structure that can obtain a sharp directivity and a high antenna efficiency, and has a configuration that enables a size reduction of a sensor circuit region 101C including the sensor circuit section 19, a transmitting antenna section 21, and the receiving antenna section 23. FIG. 15 is a schematic cross-sectional view of the transmitting antenna 10 and the receiving antenna 11 in the radio wave sensor apparatus 100C in Embodiment 3 of the present invention, and shows a part of the substrate 20 on which the transmitting antenna 10 and the receiving antenna 11 are disposed. The radio wave sensor apparatus 100C in this embodiment can be expressed in the same schematic plan view as the radio wave sensor apparatus 100B in the above-described Embodiment 2, and thus its schematic plan view is omitted. FIG. 15 is a schematic cross-sectional view corresponding to FIG. 8 explained in the above Embodiment 2. As shown in FIG. 15, in the radio wave sensor apparatus 100C according to the present Embodiment 3, the transmitting antenna section 21 configuring the transmitting antenna 10 and the receiving antenna section 23 configuring the receiving antenna 11 are disposed on the substrate 20. Each of the transmitting antenna section 21 and the receiving antenna section 23 can be configured of a coplanar patch antenna. Here, the transmitting antenna section 21 and the receiving antenna section 23 can be disposed adjacent to each other to an extent where a wall portion 27 can be disposed therebetween, and the dimension between the center of the transmitting antenna section 21 and the center of the receiving antenna section 23 can be set to one wavelength of a high frequency signal used, for example. As a result, the size of the sensor circuit region 101C including the sensor circuit section 19, the transmitting antenna section 21, and the receiving antenna section 23 can be reduced.

The transmitting horn section 22C and the receiving horn section 24C, which are disposed so as to cover the transmitting antenna section 21 and the receiving antenna section 23, respectively, have a configuration in which a wall portion 27 is disposed between the transmitting antenna section 21 and the receiving antenna section 23. The wall portion 27 is connected to a ground plane 26 and has a function of improving the isolation (separation) characteristics between the transmitting antenna 10 and the receiving antenna 11. Each inner wall of the transmitting horn section 22C and the receiving horn section 24C except for the wall surface of the wall portion 27 can be configured of a part of an inner wall of a general multi-mode horn that is designed so that desired antenna gain and directivity can be obtained. In this embodiment, a multi-mode horn by which desired characteristics can be obtained is evenly divided along the height direction by the wall portion 27, the transmitting horn section 22C is configured of one of the inner walls of the divided multi-mode horn and one of the surfaces of the wall portion 27, and the receiving horn section 24C is configured of the other inner wall of the multi-mode horn and the other surface of the wall portion 27. The transmitting horn section 22C and the receiving horn section 24C are disposed on the substrate 20 via the ground plane 26, respectively, have a rectangular waveguide shape in the vicinity of the transmitting antenna section 21 and the receiving antenna section 23, and are configured in a manner that an opening area is enlarged with being away from the transmitting antenna section 21 and the receiving antenna section 23 in the height direction, in which a degree of the enlargement changes at a predetermined position. Each opening of the transmitting horn section 22C and the receiving horn section 24C has a square shape.

Further, the wall portion 27 is disposed vertical to the surface of the substrate 20, in which a wall surface region vertical from an open end side of the transmitting horn section 22C and an open end side of the receiving horn section 24C toward the transmitting antenna section 21 and the receiving antenna section 23, respectively is configured. By evenly dividing a space by the wall portion 27 in this way, the transmitting horn section 22C and the receiving horn section 24C disposed adjacent to each other can have a symmetrical shape with respect to the wall portion 27, and thereby the transmitting antenna 10 and the receiving antenna 11 having uniform characteristics are disposed adjacent to each other. Also in this embodiment, the description "disposed vertical" shall include the case where the wall surface region is formed in the direction perfectly orthogonal to the surface of the substrate 20, as well as the case where the wall surface region slightly tilting from the direction orthogonal to the surface of the substrate 20 is formed within a range where desired characteristics can be obtained. Further, the case is included where a part of the wall surface region slightly tilts from the direction orthogonal to the surface of the substrate 20.

The high frequency signal generated by the oscillator 12 formed in the sensor circuit section 19 is transmitted to the transmitting antenna section 21 through the transmission line 25. Also in this embodiment, the length of the transmission line 25 can be shortened, because the transmitting antenna section 21 and the receiving antenna section 23 can be disposed adjacent to each other to an extent where the dimension between the center of the transmitting antenna section 21 and the center of the receiving antenna section 23 corresponds to one wavelength of a high frequency signal used. With this configuration, a transmission loss in the transmission line 25 is reduced, and the high frequency signal generated by the oscillator 12 is sent effectively from the transmitting antenna section 21 configured of a coplanar patch antenna, is wave-shaped so that the radio wave is directed toward a desired direction in the transmitting horn section 22C, and is then radiated into a space from an opening of the transmitting antenna 10. Accordingly, the gain (antenna gain) in a desired direction can be enhanced. Also in this embodiment, an explanation is given assuming that a plane parallel to the wall portion 27 is a E-plane and a plane orthogonal to the E-plane is a H-plane.

In the case where the object 200 exists in a space where a high frequency signal is radiated, the high frequency signal that has been radiated by the transmitting antenna 10 is reflected by the object 200. The reflected wave is received by the receiving antenna 11. In the receiving antenna 11, the reflected wave passes through the receiving horn section 24C, is converted from a waveguide mode to a transmission line mode in the receiving antenna section 23, and is then transmitted to the sensor circuit section 19 through the transmission line 25. By performing a desired signal processing in the sensor circuit section 19, it is possible to detect presence/absence of the object 200, its movement state, a distance to the object, and the like.

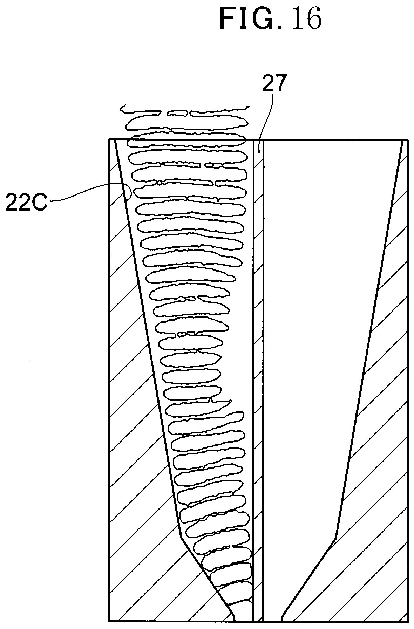

FIG. 16 shows an electric field distribution view in the case where a high frequency signal is radiated from the transmitting antenna 10 of the radio wave sensor apparatus 100C in this embodiment. Compared to the electric field distribution view shown in FIG. 10, which has been explained in the radio wave sensor apparatus 100B in the above-described Embodiment 2, it is recognized that the direction toward which the high frequency signal is radiated faces the front side of the antenna. Such a technique of changing a direction toward which a high frequency signal is radiated can be realized by applying a technique of designing a general multi-mode horn.

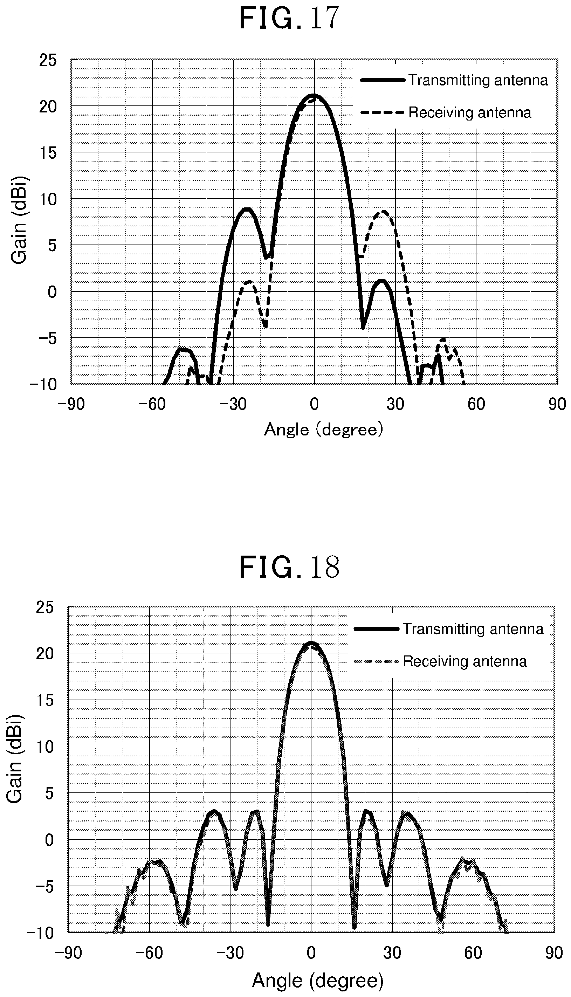

FIG. 17 is a view explaining antenna gains of the transmitting antenna 10 and the receiving antenna 11 in the radio wave sensor apparatus 100C of this embodiment, in which the antenna gains on the plane (H-plane) orthogonal to the wall portion 27 are shown. In FIG. 17, the antenna gain of the transmitting antenna 10 is indicated by a solid line, and the antenna gain of the receiving antenna 11 is indicated by a broken line. As shown in FIG. 17, it is recognized that the transmitting antenna 10 and the receiving antenna 11 have the highest antenna gains at the front of the openings. Further, although shapes of sidelobes become asymmetrical due to asymmetrical shapes of the hones and relatively large sidelobes appear on one side, slopes of the sidelobes of the transmitting antenna 10 and the receiving antenna 11 become symmetrical to each other and thus the sidelobe of the receiving antenna 11 becomes small at an angle where the transmitting antenna 10 has a large sidelobe.

FIG. 18 is a view explaining antenna gains of the transmitting antenna 10 and the receiving antenna 11 in the radio wave sensor apparatus 100C of this embodiment, in which the antenna gains on the plane (E-plane) parallel to the wall portion 27 are shown. **In** FIG. 18, the antenna gain of the transmitting antenna 10 is indicated by a solid line and the antenna gain of the receiving antenna 11 is indicated by a broken line. As shown in FIG. 18, the transmitting antenna 10 and the receiving antenna 11 have the highest gains at the front of their openings. Further, it is recognized that there is little difference in the antenna gain between the transmitting antenna 10 and the receiving antenna 11.

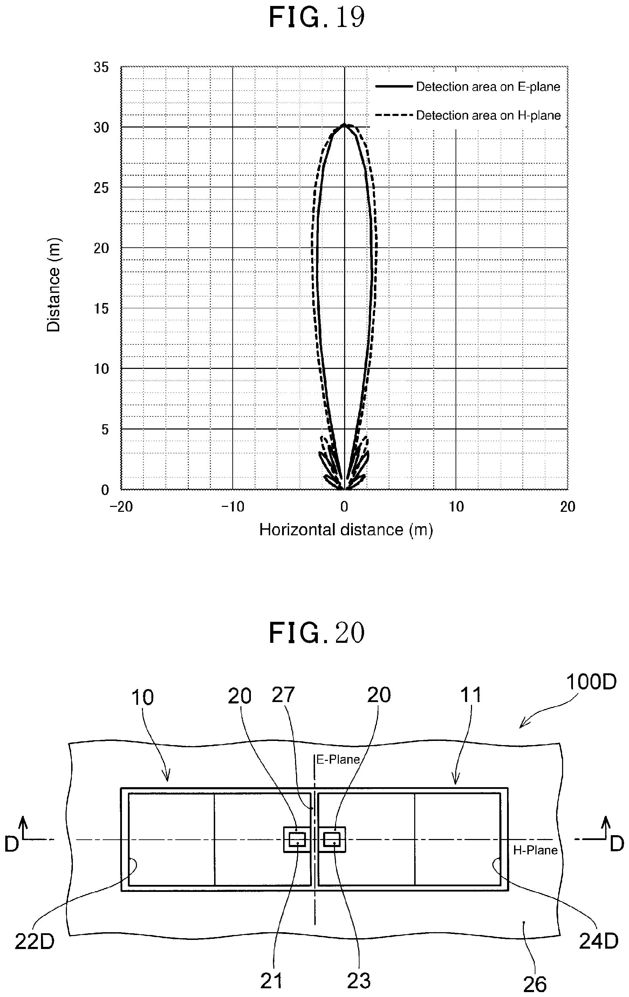

FIG. 19 is a view explaining a detection area of the radio wave sensor apparatus 100C provided with the transmitting antenna 10 and the receiving antenna 11 having the antenna gains shown in FIG. 17 and FIG.18, which is an example in the case where a high frequency signal in the millimeter wave band (frequency: 60 GHz) is transmitted/received. In FIG. 19, a detection area on the plane (E-plane) parallel to the wall portion 27 is indicated by a solid line and a detection area on the plane (H-plane) orthogonal to the wall portion 27 is indicated by a broken line. As shown in FIG. 19, it is recognized that the radio wave sensor apparatus 100C is capable of detection in the forward direction of the transmitting antenna 10 and the receiving antenna 11. Further, in this embodiment, it can be confirmed that a sharp directivity can be obtained because of a horn antenna structure. Particularly in the radio wave sensor apparatus 100C of this embodiment, the direction toward which the high frequency signal is radiated is suppressed from tilting from the front as in the radio wave sensor apparatus 100B explained in the above Embodiment 2, and a detection distance as a radio wave sensor apparatus can be lengthened, which is preferable. In an example of this embodiment, the antenna gains on the front is high, a detection area can be extended, and thereby an object at a farther location can be detected, because the directivity both on the H-plane and the E-plane is sharp (narrow) and the directivity can be arranged toward the front direction of the antenna. In an example of this embodiment, the detection area can be made about twice as large as the transmitting antenna 10 and the receiving antenna 11 that have been explained in Embodiment 2 with the same size of opening, and an object at a farther location can be detected. Furthermore, it can also be confirmed that the effect of the asymmetrical sidelobes is compensated by the antenna gain synthesis between the transmitting antenna 10 and the receiving antenna 11, thereby obtaining a shape with a good symmetry for a detection area.

In this embodiment, the case has been explained where the widths of the E-plane and the H-plane are made substantially the same in the opening of the transmitting horn section 22C of the transmitting antenna 10 and the opening of the receiving horn section 24C of the receiving antenna 11 and the openings have a square shape, but the opening of the transmitting horn section 22C and the opening of the receiving horn section 24C may have a rectangular shape with any selected ratio between the E-plane and the H-plane. Also, any polygonal shape may be selected. Further, the transmitting horn section 22C and the receiving horn section 24C may be formed asymmetrically with respect to the wall portion 27.

Also in the present embodiment, an opening area of the receiving antenna 11 can be made larger than that of the transmitting antenna 10 as explained in the variation of the above Embodiment 2. Further, as explained in another variation of the above Embodiment 2, the number of the receiving antenna 11 can be increased compared to the number of the transmitting antenna 10. In this way, the antenna gains of the transmitting antenna 10 and the receiving antenna 11 can be adjusted by appropriately setting an opening area or the number of the transmitting antenna 10 and the receiving antenna 11. Further, a highly functional radio wave sensor apparatus is enabled by arranging a plurality of receiving circuits, by which an angle where an object exists can be detected and countermeasures for interference can be taken.

### (Embodiment 4)

Then, Embodiment 4 of the radio wave sensor apparatus of the present invention is explained. As in Embodiment 1, a radio wave sensor apparatus 100D of this embodiment can detect presence/absence of the object 200, its movement state, a distance to the object, and the like, by means of a configuration and signal processing similar to the radio wave sensor apparatus 100 explained in FIG. 26. Further, the shapes of the transmitting antenna 10 and the receiving antenna 11 are different from those in Embodiments 1-3.

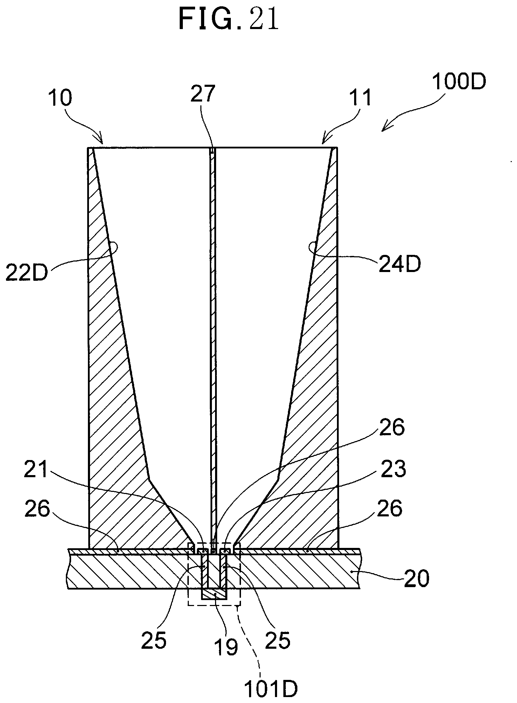

The radio wave sensor apparatus 100D in this embodiment also has the transmitting antenna 10 and the receiving antenna 11 with a horn antenna structure that can obtain a sharp directivity and a high antenna efficiency, and has a configuration that enables a size reduction of the sensor circuit region 101D including the sensor circuit section 19, the transmitting antenna section 21, and the receiving antenna section 23. FIG. 20 is a schematic plan view of the transmitting antenna 10 and the receiving antenna 11 in the radio wave sensor apparatus 100D in Embodiment 4 of the present invention, showing a part of the substrate 20 on which the transmitting antenna 10 and the receiving antenna 11 are disposed. FIG. 21 is a schematic cross-sectional view taken along the line D-D of the radio wave sensor apparatus 100D shown in FIG. 20. As shown in FIG. 20 and FIG. 21, in the radio wave sensor apparatus 100 D according to the present Embodiment 4, the transmitting antenna section 21 configuring the transmitting antenna 10 and the receiving antenna section 23 configuring the receiving antenna 11 are disposed on the substrate 20. Each of the transmitting antenna section 21 and the receiving antenna section 23 can be configured of a coplanar patch antenna. Here, the transmitting antenna section 21 and the receiving antenna section 23 can be disposed adjacent to each other to an extent where a wall portion 27 can be disposed therebetween, and the dimension between the center of the transmitting antenna section 21 and the center of the receiving antenna section 23 can be set to one wavelength of a high frequency signal used, for example. As a result, the size of the sensor circuit region 101D including the sensor circuit section 19, the transmitting antenna section 21, and the receiving antenna section 23 can be reduced.

The transmitting horn section 22D and the receiving horn section 24D, which are disposed so as to cover the transmitting antenna section 21 and the receiving antenna section 23, have a configuration in which the wall portion 27 is disposed between the transmitting antenna section 21 and the receiving antenna section 23. The wall portion 27 is connected to a ground plane 26, and has a function of improving the isolation (separation) characteristics between the transmitting antenna 10 and the receiving antenna 11. Each inner wall of the transmitting horn section 22D and the receiving horn section 24D except for a wall surface of the wall portion 27 can be configured of a part of an inner wall of a general multi-mode horn that is designed so that the desired antenna gain and directivity can be obtained. In this embodiment, the horn sections have strip-shaped openings in which either one of the openings on the E-plane or the H-plane is widened and the other one is not widened. By forming the openings into such shapes, the transmitting antenna 10 and the receiving antenna 11 have a narrow directivity in the direction of the widened opening and have a wide directivity in the direction of the narrow opening. By disposing the transmitting antenna 10 and the receiving antenna 11 in a manner that they have this spreading direction of the directivity with the same shape, a detection area can be formed into, for example, a fan shape having a broad area in the horizontal direction and a narrow area in the vertical direction. In the radio wave sensor apparatus 100D provided with the transmitting antenna 10 and the receiving antenna 11 having such a directivity, it is possible to narrow the directivity in the vertical direction that is not necessary for observation, enhance a gain (an antenna gain) in a desired direction, and reduce the interference by the radio wave that has been reflected by the ground, ceiling, and the like, when a detection in the horizontal direction is performed, and thereby a wide detection area in a desired direction can be obtained.

**In** a case where the high frequency signal is radiated from the transmitting antenna 10 of the radio wave sensor apparatus 100D in this embodiment, the electric field distribution on the cross section shown in FIG. 21 is substantially the same as the electric field distribution shown in FIG. 16 that is explained in the above Embodiment 3.

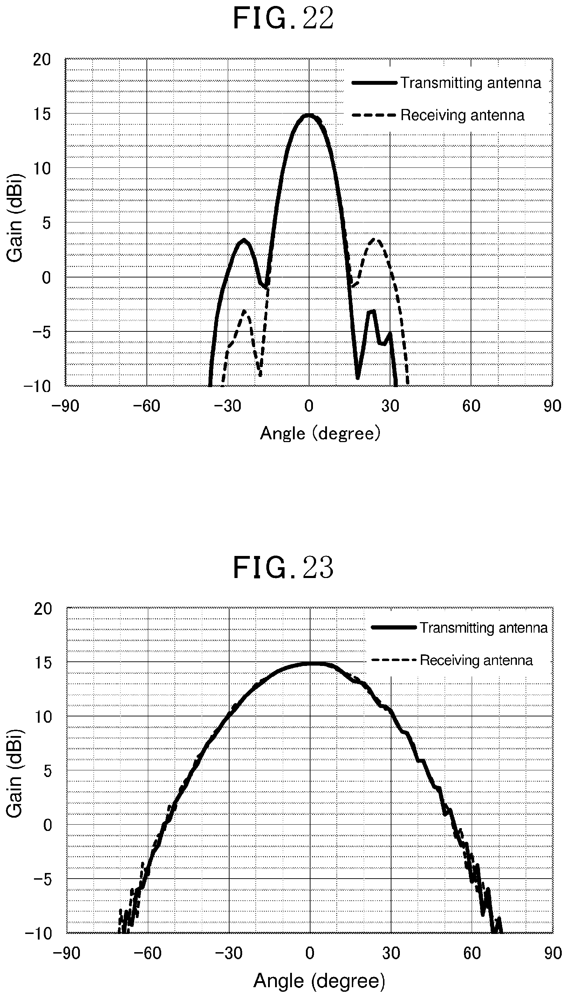

FIG. 22 is a view explaining antenna gains of the transmitting antenna 10 and the receiving antenna 11 of the radio wave sensor apparatus 100D in this embodiment, in which the antenna gains on the plane (H-plane) orthogonal to the wall portion 27 in FIG. 20 and FIG. 21 are shown. In FIG. 22, the antenna gain of the transmitting antenna 10 is indicated by a solid line and the antenna gain of the receiving antenna 11 is indicated by a broken line. As shown in FIG. 22, it is recognized that antenna gains of the transmitting antenna 10 and the receiving antenna 11 is substantially the same as the antenna gains shown in FIG. 17 explained in the above Embodiment 3.

FIG. 23 is a view explaining antenna gains of the transmitting antenna 10 and the receiving antenna 11 in the radio wave sensor apparatus 100D in this embodiment, in which the antenna gains on the plane (E-plane) parallel to the wall portion 27 in FIG. 20 and FIG. 21 are shown. In FIG. 23, the antenna gain of the transmitting antenna 10 is indicated by a solid line and the antenna gain of the receiving antenna 11 is indicated by a broken line. As shown in FIG. 23, it is recognized that the transmitting antenna 10 and the receiving antenna 11 have wider antenna gains compared to those shown in FIG. 18 explained in the above Embodiment 3.

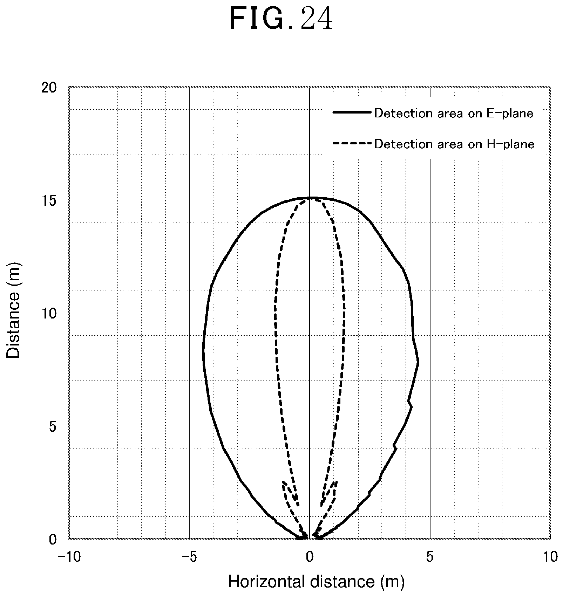

FIG. 24 is a view explaining a detection area of the radio wave sensor apparatus 100D provided with the transmitting antenna 10 and the receiving antenna 11 having the antenna gains shown in FIG. 22 and FIG. 23, and is an example of a case in which the high frequency signal in the millimeter wave band (frequency: 60 GHz) is transmitted and received. In FIG. 24, a detection area on the plane (E-plane) parallel to the wall portion 27 is indicated by a solid line, and a detection area of the plane (H-plane) orthogonal to the wall portion 27 is indicated by a broken line. As shown in FIG. 24, it is recognized that the directivity of the radio wave sensor apparatus 100D in this embodiment has a narrow circular fan shape on the H-plane and has a wide circular fan shape on the E-plane. Accordingly, a detection with wide angle and farther location can be performed by disposing the H-plane so as to be vertical to the ground, for example. The reflected wave from the ground or the like is reduced in this case, which is preferable.

It should be noted that the width of the E-plane is made small and that of the H-plane is widened on each opening of the transmitting horn section 22D in the transmitting antenna 10 and of the receiving horn section 24D in the receiving antenna 11 as explained above, but it is possible to make the plane orthogonal to the wall portion 27 shown in FIG. 20 and FIG. 21 to be the E-plane and the plane orthogonal to the E-plane to be the H-plane.

Then, a variation of Embodiment 4 is explained. FIG. 25 is a schematic plan view of the transmitting antenna and the receiving antenna in the radio wave sensor apparatus in a variation of Embodiment 4. In the variation of this embodiment, a plurality of the transmitting antenna 10 and a plurality of the receiving antenna 11 are disposed. By disposing a plurality of the transmitting antenna 10 and a plurality of the receiving antenna 11 in this way, it is possible to apply the apparatus to various kinds of application such as an angle (position) detection of an object based on a phase difference of reception signals among the plurality of receiving antennas 11 and a reduction in interference effect by switching the transmitting antenna 10. In addition, any arrangement and number of the transmitting antenna 10 and the receiving antenna 11 can be set without limited to the example shown in FIG. 25. In the variation of this embodiment, the radio wave sensor apparatuses as explained in the above Embodiment 4 are configured so as to be adjacent to each other, and thereby it is possible to reduce the size of the sensor circuit region 101D1 including the sensor circuit section, the transmitting antenna section 21, and the receiving antenna section 23, similarly to Embodiment 4.

In each of Embodiments described above, it has been explained that the transmitting antenna section 21 and the receiving antenna section 23 are configured of a coplanar patch antenna structure, but the present invention is not limited to such a configuration and it can be modified into a slot antenna structure or a waveguide probe structure. Further, various kinds of modifications can be made such as arranging a larger number of the receiving antenna 11 than the transmitting antenna 10, without limitation by the above-described Embodiments. Furthermore, the size reduction of the radio wave sensor apparatuses 100A-D can be attained by disposing, on the wall portion 27 configuring the transmitting horn sections 22A-D and the receiving horn sections 24A-D, a wall surface region vertical to the plane on which the transmitting antenna section 21 and the receiving antenna section 23 are disposed. Although, in the above-described Embodiment, the wall portion 27 is a wall surface region vertical to the above-described plane as a whole, it is sufficient to form a certain amount of region from each open end side of the transmitting horn sections 22A-D and the receiving horn sections 24A-D toward the transmitting antenna section 21 and the receiving antenna section 23, as the wall surface region vertical to the above-described plane, respectively, to an extent where the sizes of the radio wave sensor apparatuses 100A-D can be reduced.

Although the transmitting antenna 10 and the receiving antenna 11 have been explained while specifying the E-plane and the H-plane orthogonal thereto, there is no problem even if the E-plane and the H-plane are exchanged.

In the case where the transmitting horn sections 22A-D and the receiving horn sections 24A-D that have been explained in the above-described Embodiments are integrally configured by a member that has a cylinder or prism shape provided with a through hole having a partition wall in the height direction, an adhesive characteristics in joining the transmitting antenna 10 and the receiving antenna 11 onto the substrate 20 can be improved. Further, by forming an outer shape of the whole of the transmitting antenna 10 and the receiving antenna 11 into a cylinder shape and by applying a screw machining on the outer circumference thereof, the radio wave sensor apparatuses 100A-D can be easily disposed through screwing.

### (Conclusion)

(1) An embodiment of a radio wave sensor apparatus of the present invention comprises: an oscillator to generate a high frequency signal; a transmitting antenna to radiate the high frequency signal into a space; a receiving antenna to receive a reflected wave of the high frequency signal from an object; a mixer to mix the high frequency signal and the reflected wave received by the receiving antenna to produce a reception signal; and a signal processing device to produce a detection signal of an object from the reception signal, in which the transmitting antenna has a transmitting antenna section and a transmitting horn section; the receiving antenna has a receiving antenna section and a receiving horn section; the transmitting antenna section and the receiving antenna section are disposed in a spaced manner on the same plane; an inner wall of the transmitting horn section and an inner wall of the receiving horn section have a wall portion that separates the transmitting antenna and the receiving antenna from each other; the wall portion having a wall surface region vertical to the plane from an open end side of the transmitting horn section and an open end side of the receiving horn section toward the transmitting antenna section and the receiving antenna section, respectively; and the transmitting horn section and the receiving horn section are disposed adjacent to each other via the wall portion.
   According to the radio wave sensor apparatus of the present embodiment, it is possible to reduce the size because in the inner wall of the transmitting horn section and the inner wall of the receiving horn section, the wall portion separating the transmitting antenna and the receiving antenna has a wall surface region vertical from the open end sides toward the transmitting antenna section and the receiving antenna section, respectively, and the transmitting horn section and the receiving horn section are disposed adjacent to each other. Further, a radio wave sensor apparatus having a sharp directivity and a high antenna gain can be provided because the transmitting antenna and the receiving antenna are configured with a horn antenna structure.
(2) The transmitting horn section and the receiving horn section can be configured by dividing a conical horn evenly along a height direction by the wall portion.
(3) The transmitting horn section and the receiving horn section can be configured by dividing a pyramidal horn evenly along a height direction by the wall portion.
(4) The transmitting horn section and the receiving horn section can be configured by dividing a multi-mode horn evenly along a height direction by the wall portion.
(5) The transmitting horn section and the receiving horn section can be integrally formed by a member in a cylinder shape or a prism shape provided with a through hole having a partition wall in a height direction, and the partition wall can be the wall portion separating the transmitting antenna and the receiving antenna from each other.

### REFERENCE SIGNS LIST

- 100, 100A-D.: Radio wave sensor apparatus
- 101, 101A-D.: Sensor circuit region
- 200.: Object
- 10.: Transmitting antenna
- 11.: Receiving antenna
- 12.: Oscillator
- 13.: Transmitting side amplifier
- 14.: Receiving side amplifier
- 15.: Mixer
- 16.: Amplifier
- 17.: A/D converter
- 18.: Signal processing device
- 19.: Sensor circuit section
- 20.: Substrate
- 21.: Transmitting antenna section
- 22, 22A-D.: Transmitting horn section
- 23.: Receiving antenna section
- 24, 24A-D.: Receiving horn section
- 25.: Transmission line
- 26.: Ground plane
- 27.: Wall portion

## Claims

1. A radio wave sensor apparatus comprising:
an oscillator to generate a high frequency signal;
a transmitting antenna to radiate the high frequency signal into a space;
a receiving antenna to receive a reflected wave of the high frequency signal from an object;
a mixer to mix the high frequency signal and the reflected wave received by the receiving antenna to produce a reception signal; and
a signal processing device to produce a detection signal of the object from the reception signal;
wherein the transmitting antenna has a transmitting antenna section and a transmitting horn section;
wherein the receiving antenna has a receiving antenna section and a receiving horn section;
wherein the transmitting antenna section and the receiving antenna section are disposed in a spaced manner on a same plane;
wherein an inner wall of the transmitting horn section and an inner wall of the receiving horn section have a wall portion that separates the transmitting antenna and the receiving antenna from each other; the wall portion having a wall surface region vertical to the plane from an open end side of the transmitting horn section and an open end side of the receiving horn section toward the transmitting antenna section and the receiving antenna section, respectively; and
wherein the transmitting horn section and the receiving horn section are disposed adjacent to each other via the wall portion.

2. The radio wave sensor apparatus according to claim 1,
wherein the transmitting horn section and the receiving horn section are configured by dividing a conical horn evenly along a height direction by the wall portion.

3. The radio wave sensor apparatus according to claim 1,
wherein the transmitting horn section and the receiving horn section are configured by dividing a pyramidal horn evenly along a height direction by the wall portion.

4. The radio wave sensor apparatus according to claim 1,
wherein the transmitting horn section and the receiving horn section are configured by dividing a multi-mode horn evenly along a height direction by the wall portion.

5. The radio wave sensor apparatus of according to any one of claims 1 to 4, wherein
the transmitting horn section and the receiving horn section are integrally formed by a member in a cylinder shape or a prism shape provided with a through hole having a partition wall in a height direction; and
the partition wall is the wall portion separating the transmitting antenna and the receiving antenna from each other.
